# EUROPEAN PATENT APPLICATION

(11) **EP 4 604 459 A1**
(43) Date of publication of application: **20.08.2025**
(21) Application number: 24157558.8
(22) Date of filing: 14.02.2024
(51) Int. Cl.: H04L 12/46

(54) **VIRTUAL PRIVATE NETWORK TUNNELLING**

(71) Applicant: Tessares SA, 1348 Louvain-la-Neuve (BE)
(72) Inventor: DETAL, Gregory, 5032 Isnes (BE)
(74) Representative: IP HILLS NV

(57) **Abstract**

A method for providing a client node access to a remote network via a VPN tunnel to a VPN server; wherein the client node is connected to a local network; wherein a relay node is connected to the local network over a first communication interface, and to a wireless access network over a wireless communication interface; the method comprising: exchanging traffic between the client node and the first communication interface of the relay node, by encapsulating the traffic as VPN traffic of the VPN tunnel, and exchanging the VPN traffic as payload over a first transport layer communication link between the client node and the relay node; relaying the payload over a second transport layer communication link between the wireless communication interface and the VPN server; and exchanging, by the VPN server, the traffic between the VPN tunnel and the remote network.

## Description

### Field of the Invention

The present invention generally relates to the field of virtual private networks, VPNs. More particular, the invention relates to the field of providing a client node, connected to a local network, access to a remote network via a VPN tunnel to a VPN server connected to a second network.

### Background of the Invention

A Virtual Private Network, VPN, connection is a secure connection over a public network, e.g. the Internet. A VPN connection is established between two nodes that are connected via one or more public networks. Communication over the public network may, for example, be provided by a connectionless protocol, e.g. User Datagram Protocol, UDP. Security is achieved by mechanisms such as encryption and encapsulation of information. A VPN connection is experienced by a client node as direct network connection with the private network even though communication resides over a public network. The private network that is perceived by client node is therefore referred to as virtual, i.e. a VPN, since the user is physical still connected by means of a public network.

The concept of VPN may be used to allow remote access to a private network. For example, this may allow employees to work from home via a connection from a private home network via the Internet. Remote access VPN can also allow a user to connect to a private network from a public network, e.g. a free wireless fidelity, Wi-Fi, local network provided in a public area such as an airport or a coffee bar.

### Summary of the Invention

According to some aspects, there is provided the subject matter of the independent claims. Some further aspects are defined in the dependent claims.

According to a first aspect, a computer-implemented method is provided for providing a client node access to a remote network via a virtual private network, VPN, tunnel to a VPN server. The client node is connected to a local network. A relay node is connected to the local network over a first communication interface, and is further connected to a wireless access network over a wireless communication interface. The method comprises the following steps: exchanging traffic between the client node and the first communication interface of the relay node, by encapsulating the traffic as VPN traffic of the VPN tunnel, and exchanging the VPN traffic as payload over a first transport layer communication link between the client node and the relay node; relaying the payload over a second transport layer communication link between the wireless communication interface of the relay node and the VPN server; and thereby, by the exchanging and relaying steps, exchanging the traffic between the client node and the VPN server via the VPN tunnel over a first network path; and exchanging, by the VPN server, the traffic between the VPN tunnel and the remote network.

The client node may, for example, be a laptop of a user connecting to the VPN server to work remotely from the remote network. The relay node may, for example, be a smartphone or a dedicated relaying device. The method provides exchanging of traffic over a VPN tunnel via the relay node over a wireless access network, e.g. a cellular access network. The VPN tunnel extends between the client node and the VPN server over the first network path. Payload data at the client side is converted to network traffic, i.e. the traffic, e.g. TCP/IP packets, enabling the client node to communicate with a target node in the remote network. This network traffic is on its turn transported as VPN payload data of the VPN traffic over the VPN tunnel. The VPN traffic is transported by means of the first and second transport layer communication links.

The method provides relaying of the VPN tunnel via the relay node. This allows the client node to obtain VPN access over the VPN tunnel via an access network that is not directly accessible by the client node itself. The relaying performed by the relay node only requires communication sockets for the transport layer communications links. Such communication sockets can be established by a user application, i.e. they do not require system level administration rights. Further, the relay node does not need to be configured as a hot spot that provides network access. In other words, the relay node does not need to be configured as an access point.

The exchanging of the traffic may be performed over the local network, e.g. via a local gateway or switch. To this end, the relay node may be connected as a wireless client or a local client to the local network. As a result, the relaying may be provided as a relay application that is installed as a user or client application and configured to perform the steps. Alternatively, the exchanging of the traffic may be performed over a peer-to-peer, P2P, network connection between the client node and relay node. To this end, the client node and the relay node are considered to be directly connected to each other. The first transport layer communication link is then established over this direct connection thereby reducing latency in traffic exchanged over the VPN tunnel.

The relaying may be provided as a relay application that is installed as a user or client application and configured to perform the steps.

According to further example embodiments, the first transport layer communication link is a first User Datagram Protocol, UDP, communication link, the second transport layer communication link is a second UDP communication link, and the payload is UDP payload.

UDP is a connectionless communication protocol operating on the transport layer of the network protocol stack, also referred to as the network stack. A UDP communication link is a link where traffic is encapsulated into UDP packets according to UDP by applying a UDP header on the transport layer. A UDP communication link is identified by a network address and port number on either side of the link. The local connection of an application with such a communication link is typically provided in the form of a UDP socket.

UDP is a well-known and widespread transport layer communication protocol. Most devices are configured to communicate in accordance with UDP. Therefore, when using UDP communication links, no further configuration changes need to be made to the client node, the relay node and the VPN server concerning the transport layer communication protocol. In addition, the connectionless nature of UDP allows for an efficient communication with limited overhead and avoids the need for transport layer overhead to maintain a stateful connection.

According to further example embodiments, the method further comprises: instructing, by the client node, over a control channel, the relay node to provide a relay service for performing the relaying with the VPN server; starting, by the relay node, the relay service; and providing, over the control channel, the client node a UDP port on the relay node for establishing the first UDP communication link.

The control channel is used for control communication between the client node and the relay node regarding the set-up of the relaying. The client node may instruct the relay node to set-up the second communication link with the VPN server via the control channel. The relay node may use the control channel to inform the client node of the UDP port for the VPN tunnelling after set-up. The relay service comprises the relaying of traffic between the client node and the VPN server.

According to further example embodiments, the method further comprises: providing, by the relay node, a discovery service for discovering the relay node via the local network; and establishing, by the client node, the control channel with the discovered relay node.

By the discovery service, the client node can discover a client that supports the relaying, i.e. a relaying node, as long as the relay node is connected to the local network. The discovery service may comprise listening for a request sent by a client node wishing to initiate a relay service via the relay node. Such a request may, for example be a predefined multicast message transmitted within the local network. The relay node may then provide its network address as a response to the client node. The control channel serves the purpose of providing a secured channel to agree on the set-up of the VPN tunnel over the first network path.

According to further example embodiments, the establishing of the control channel further comprises authenticating the client node with the relay node.

The control channel may, for example, be established by means of a handshaking protocol. The first time the client node and the relay node establish the control channel, the establishing may be referred to as 'pairing' of the client node and the relay node. The devices are then not yet known to each other and elaborate security agreements and checks may be appropriate for first-time authentication. For example, credentials may be checked on both sides and/or manual pairing may be performed on the client node and the relay node. At the beginning of a session after pairing, the client node and the relay node may establish the control channel quicker by omitting some or all of the authentication steps performed during pairing. For example, during the pairing, the client node and the relay node may exchange a secret key to be used during later sessions to simplify authentication.

According to further example embodiments, the method further comprises, by the client node, providing a virtual network interface for accessing the remote network over the VPN tunnel.

The virtual network interface, also referred to as virtual interface, is used for exchanging traffic between the client node and the VPN server. The virtual network interface is configured to forward network traffic that addresses the remote network to a VPN client application on the client node. The virtual network interface is also configured to receive network traffic from the VPN client application on the client node and to provide the traffic to a client application on the client node. The VPN client application provides the VPN end-point functionality on the client node by providing the encapsulation on the level of VPN, i.e. on the second encapsulation level. By providing the virtual network interface, the VPN tunnelling is shielded off from other client applications on the client node.

According to further example embodiments, the local network is further connected to a second access network via a local gateway configured to provide access to the VPN server via a second network path.

The second access network may be a wired or wireless network, for example operated by an Internet Service Provider.

According to further example embodiments, the virtual network interface is configurable to exchange the traffic over the VPN tunnel between the client node and the VPN server via the first network path and/or the second network path.

Allowing exchanging traffic over either or both of the first and second network paths provides flexibility to the VPN tunnel. By hiding the implementation thereof behind the virtual network interface, the remainder of the client node remains unaffected during transitions. As a result, switching between the network paths will not result in breaking ongoing network connections between the client node and the remote network.

According to further example embodiments, the exchanging of the traffic via the second network path comprises: encapsulating the traffic as VPN traffic of the VPN tunnel, and exchanging the VPN traffic as payload over a third transport layer communication link between the client node and the VPN server.

The third transport layer communication link may be a third UDP communication link.

According to further example embodiments, the method further comprises establishing the VPN tunnel between the client node and the VPN server via the first network path and/or the second network path.

According to further example embodiments, the method further comprises: exchanging the traffic via the second network path; and, upon detecting a predefined network condition, reconfiguring the virtual network interface to exchange the traffic via the first network path.

The predefined network condition may result from a failure of the second access network, e.g. during an outage. The predefined network condition may also be defined so as to detect high congestion over the second network path.

According to further example embodiments, the method further comprises: distributing, by the client node and the VPN server, traffic between the client and the remote network over both the first and second network path; and recombining, by the client node and the VPN server, traffic received from the first and second network path.

By simultaneously using both the first and the second network path, a multipath VPN tunnel is achieved. By using more than one link in parallel, a higher throughput may be achieved. Depending on network conditions over the first and second network paths, an asymmetric use of the first and second network paths may be applied. It is noted that the multipath VPN tunnelling may be applied using more than two parallel network paths between the client node and the VPN server.

According to further example embodiments, the virtual network interface is configured to exchange the traffic over the VPN tunnel between the client node and the VPN server via the first network path; and the method further comprises providing, by the client node, a second virtual network interface and establishing a second VPN tunnel between the client node and the VPN server via the second network path.

By providing two separate virtual network interfaces, more control is handed to a client application of the client node to steer the traffic over the first and/or second network path.

According to further example embodiments, the remote network is the Internet or a private network.

The target node may be accessible directly via the Internet wherein the VPN tunnel provides Internet access via the VPN server. Alternatively, the target node may be connected to a private network and may only be accessible via a gateway of the private network.

According to further example embodiments, the VPN server is accessible over the Internet.

According to a second aspect, there is provided a relay node. The relay node is connected as a client to a local network over a first communication interface. The relay node is further connected to a wireless access network over a wireless communication interface. The relay node can access the VPN server via the wireless access network and vice versa. Additionally, the VPN server provides access to a remote network. A client node is connected to the local network and is configured to exchange traffic over a VPN tunnel with the VPN server. The relay node is configured to provide the client node access to the remote network by relaying VPN traffic between the first communication interface and the wireless communication interface, thereby providing a first network path of the VPN tunnel between the client node and the VPN server. Such a relay node may provide one or more of the above-mentioned advantages.

According to a third aspect, there is provided a client node connected to a local network. The client node is configured to exchange traffic with a VPN server over a VPN tunnel to access a remote network via the VPN server, by encapsulating the traffic as VPN traffic and exchanging the VPN traffic as payload over a first transport layer communication link between the client node and a relay node according to the second aspect. The relay node is configured to relay the payload between the relay node and the VPN server over a first network path of the VPN tunnel.

According to a fourth aspect, there is provided a VPN server connected to a remote network. The VPN server is configured to provide a client node according to the third aspect, connected to a local network, access to the remote network by exchanging traffic between a VPN tunnel and the remote network. The VPN server is further configured to exchange traffic between the VPN tunnel and the remote network, wherein the VPN tunnel with the client node is established over a first network path via a relay node according to the second aspect.

According to a fifth aspect, there is provided a system comprising the client node according to the third aspect, the relay node according to the second aspect and the VPN server according to the fourth aspect. Such a system may provide one or more of the above-mentioned advantages.

According to a sixth aspect, there is provided a computer program comprising instructions which, when executed by a relay node according to the second aspect, cause the relay node to perform the steps as performed by the relay node according to the first aspect.

According to a seventh aspect, there is provided a computer program comprising instructions which, when executed by a client node according to the third aspect, cause the client node to perform the steps as performed by the client node according to the first aspect.

According to an eighth aspect, there is provided a computer program comprising instructions which, when executed by a VPN server according to the fourth aspect, cause the VPN server to perform the steps as performed by the VPN server according to the first aspect.

According to a ninth aspect, there is provided a computer readable medium having stored thereon the computer program according to the sixth aspect.

According to a tenth aspect, there is provided a computer readable medium having stored thereon the computer program according to the seventh aspect.

According to a eleventh aspect, there is provided a computer readable medium having stored thereon the computer program according to the eighth aspect.

### Brief Description of the Drawings

Fig. 1 illustrates a client node accessing a target node in a remote network via a VPN tunnel according to example embodiments;
Fig. 2 illustrates steps performed by a client node, a relay node and a VPN server for establishing a VPN tunnel according to example embodiments;
Fig. 3 illustrates a schematic view of the transmitting network traffic in a client over a VPN tunnel according to example embodiments;
Fig. 4 illustrates a schematic view of relaying traffic in a relay node according to example embodiments;
Fig. 5 illustrates a schematic view of the processing of traffic in a VPN server from a VPN tunnel according to example embodiments;
Fig. 6 illustrates a schematic view of the processing of traffic in a client node using a virtual interface for accessing a VPN tunnel over two network paths according to example embodiments;
Fig. 7 illustrates a schematic view of the processing of traffic in a client node using two virtual interfaces for accessing a VPN tunnel over two network paths according to example embodiments; and
Fig. 8 illustrates a schematic view of a computing system according to example embodiments.

### Detailed Description of Embodiment(s)

The present disclosure relates to Internet Protocol, IP, based on interconnected computer networks such as for example the Internet. A computer network, IP network, or shortly network contains network nodes, or shortly nodes, that are capable of exchanging network packets with other network nodes that are located within the same network or in another computer network. A node can be addressed by an IP address or network address. IP addresses may be defined according to the IPv4 or the IPv6 protocol and can be used to assign private or open networks. A network node may be a communication endpoint that initiates the transmission of a network packet or is the intended receiver of the network packet. A network node may also be a redistribution point that forwards packets to other network nodes. A router is a redistribution point that connects networks and forwards packets from one network to another. The present disclosure further relates to a virtual private network, VPN, and an associated virtual private network tunnel, VPN tunnel. More specifically, the VPN tunnel connects a client node with a remote network. The remote network may be the Internet or private network.

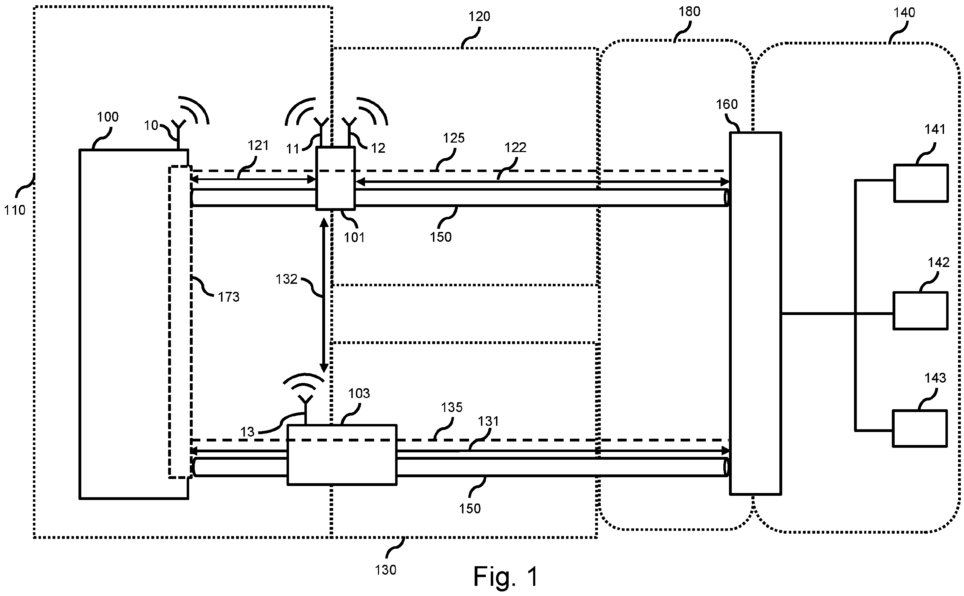

Figure 1 shows a client node 100 accessing a target node 143 in a remote network 140 via a VPN tunnel 150 according to an example embodiment.

Client node 100 comprises a network interface 173 connecting the client node with a local or private network 110, e.g. a Local Area Network, LAN, 110. Local network 110 may for example be a home network 110 and client node 100 may for example be a laptop or desktop computer. Network interface 173 may be a wired or wireless interface such as for example a wireless LAN interface or an ethernet network interface. Network interface 173 may, for example, comprise wireless network interface 10 for connecting the client node 100 with the local network 110. Local network 110 may be connected to the Internet 180 via an access network 130. Access network 130 may be under control of an Internet Service Provider 130. Local network 110 connects to access network 130 via a gateway 103. Gateway 103 may comprise a router and may apply network address translation, NAT, to network traffic exchanged between local network 110 and access network 130. Connection to the access network 130 may be in the form of a wired connection such as a digital subscriber line, cable or fibre based connection.

A VPN server 160 is accessible over the Internet 180 and provides access to a private network 140 containing one or more remote network nodes 141, 142, 143 including the target node 143. The remote network nodes 141, 142, 143 are accessible over the Internet to client node 100 via the VPN server 160. The VPN server 160 is configured to provide a VPN service, e.g. a WireGuard VPN service. A VPN tunnel 150 may be established between the client node 100 and VPN server 160 over access network 130 via third communication link 131. By the VPN tunnel 150, the remote network 140 is accessible to client node 100 allowing the exchange of network traffic between client node 100 and remote network 140. VPN tunnel 150 connects client node 100 with remote network 140 via a second network path 135 over third communication link 131.

Client node 100 may also connect to remote network 140 by VPN tunnel 150 via a first network path 125. Network traffic exchanged over the VPN tunnel 150 is first exchanged between the client node 100 and a relay node 101. Relay node 101 may, for example, be a mobile communication device, e.g. a smartphone, tablet, or laptop. Alternatively, relay node 101 may be a dedicated stationary device. According to example embodiments, multiple client nodes 100 may connect to respective remote networks 140 using respective VPN tunnels via the same relay node 101. According to further example embodiments, a single client node 100 may use two or more relay nodes 101 to connect to remote network 140 by VPN tunnel 150 via multiple respective two or more network paths 125.

Relay node 101 has two network interfaces. A first communication interface 11 connects the relay node 101 with the local network 110. The first communication interface 11 connects the relay node 101 with the local gateway 103 over communication link 132. The first communication interface 11 is used for exchanging the traffic with client node 100. Network interface 11 may be a wired or wireless interface such as for example a wireless LAN interface or an ethernet network interface. The relay node 101 has a first communication link 121 with the client node via its first network interface 11. The first communication link 121 is a connectionless transport layer link, for example, a UDP communication link. According to this example embodiment, the first communication link 121 is an indirect link via gateway 103 over communication link 132. A second network interface 12 is a wireless communication interface 12 that provides the relay node 101 access to a second access network, e.g. a wireless access network 120. Wireless access network 120 may be a cellular access network 120. Cellular access network 120 provides Internet access to relay node 101. The relay node 101 has a second communication link 122 with the VPN server 160 via its second network interface 12. The second communication link 122 is a connectionless transport layer link, for example, a UDP communication link.

The client node 100 encapsulates its traffic as VPN traffic by adding a header comprising VPN control data. The VPN traffic may be encrypted. The client node 100 transmits the VPN traffic over the first communication link 121 to relay node 101. The relay node 101 relays this received VPN traffic onto the second communication link 122. As a result, VPN server 160 receives the VPN traffic from client node 100. The VPN Server 160 extracts the traffic from the VPN traffic and forwards it to the remote network 140. The other way around, VPN server 160 receives traffic for the client node 100 from the remote network 140. The VPN server 160 encapsulates the traffic for the client node 100 as VPN traffic. The VPN server transmits the VPN traffic to the relay node 101 over the second communication link 122. Upon receival, the relay node 101 relays the received VPN traffic onto the first communication link 121. As a result, the client node 100 receives the VPN traffic from the VPN server 160. By the relay node 101, the VPN tunnel 150 between the client node 100 and VPN server 160 is obtained via the first network path 125.

Further example embodiments will describe the establishing of the VPN tunnel 150 over the first and/or second network path. By the VPN tunnel 150, the client node 100 has access to remote network 140 via two different network paths 125, 135. Further example embodiments will describe how client node 100 can use these different network paths.

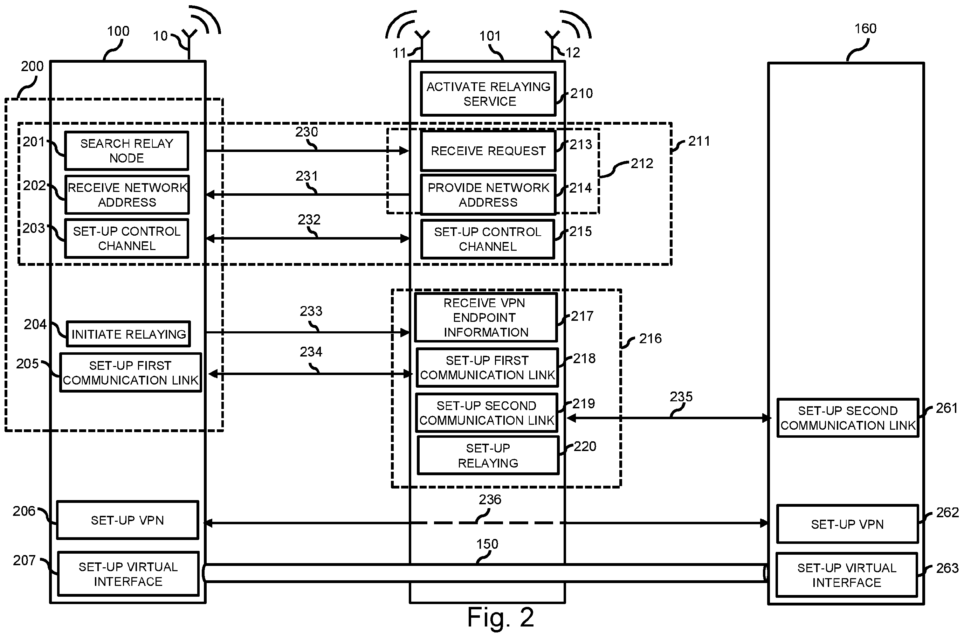

Figure 2 schematically depicts the steps performed by the client node 100, the relay node 101 and the VPN server 160 for establishing the VPN tunnel 150 via the first network path 125 according to example embodiments. The relay node 101 provides a relaying service for establishing the first network path 125 for a prospective client node. The relay node 101 activates 210 the relaying service to allow receiving requests for setting up the relaying and performing the subsequent relaying of the VPN packets. At a moment in time, the client node 100 is instructed to start the set-up of VPN tunnel 150 via the first network path 125. Such an instruction may for example be initiated by a user, or initiated automatically by the client 100. As a first step 201, the client node 100 needs to identify a relay node that is capable to provide the relaying, in this case relay node 101. To search the relay node 101, the client node 100 sends a request 230 onto the local network 110 that will reach relay node 101. The request 230 may, for example, be a multicast message 230. In receiving step 213, the relay node 101 receives the search request 230. Next, in step 214, the relay node 101 responds by providing information 231 for reaching the relay node 101 over the local network 110. Information 231 may, for example, comprise the network or IP address of relay node 101 and the port number of a corresponding socket for reaching the relaying service. In receiving step 202, the client node 100 receives the information 231. The steps 213, 214 may collectively be referred to as providing a discovery service 212 by the relay node 101. The relay node 101 may, for example, provide the discovery service 212 by implementing automatic discovery, also referred to as zero-configuration networking, e.g. by multicast DNS according to RFC 6762 issued by the Internet Engineering Task Force, IETF.

Upon identification of the relay node 101 as providing a relay service, the client node 100 can now set up a control channel with the relay node 101. The control channel can be set up upon request 232 of the client node 100. The request 232 accesses the relaying service using the provided information 231. The first set-up of the control channel may also be referred to as pairing the client node 100 and the relay node 101. The steps 201, 202, 203, 213, 214, 215 may collectively be referred to as performing a pairing mechanism 211. When the client node 100 and the relay node 101 are paired, additional steps may be performed. To this end, the set-up 203, 215 of the control channel may comprise exchanging further information 232. The set-up 203, 215 may further comprise a handshaking 232 between the client node 100 and the relay node 101. The client node 100 and relay node 101 may thereby exchange security keys 232 and agree on a security protocol 232. The set-up 203, 215 may make use of a security token to ensure that the user of the client node 100 and/or the user of the relay node 101 agree to take part in the pairing. If the client node 100 and the relay node 101 have been paired in the past, some or all additional security steps may be omitted to expedite the establishing of the control channel. After steps 203, 215, client node 100 and relay node 101 have an active control channel over a network connection, e.g. a TCP/IP connection. This control channel may be used for exchanging information between the client node 100 and relay node 101 regarding the use and set-up of the relaying.

After establishing the control channel, the client node 100 may initiate the set-up of the first network path 125 in step 204 by setting up the first communication link 121, the second communication link 122 and the relaying. The client node sends VPN endpoint information 233 relating to the VPN tunnel 150 to the relay node 101. The VPN endpoint information 233 comprises a network address of the VPN server 160 and a port number of the VPN service on VPN server 160. This information 233 allows the relay node 101 to be able to set up communication link 122 with the VPN server 160. VPN credentials are not required as VPN endpoint information 233, since the VPN credentials may be kept secret between the client node 100 and the VPN server 160. The information 233 enables the relay node 101 to set up a communication link with the destination VPN server 160. The relay node 101 receives the information 233 in step 217. In steps 205 and 218, the client node 100 and the relay node 101 exchange information 234 to set up the first communication link 121. According to example embodiments, the first communication link is a first UDP communication link 121. Establishing a communication link may comprise the creation of UDP network sockets at either sides of the link such that applications my exchange information over the link through these sockets. The client node 100 and the relay node 101 may each create a respective socket for communicating over the first UDP communication link 121. The information 234 may comprise the respective corresponding port numbers. In step 200 comprising steps 201, 202, 203, 204, 205, the client node 100 arranges the set-up of the relaying service for the first network path 125. In steps 219 and 261, the second communication link 122 is analogously established by the relay node 101 and the VPN server 160, by exchanging information 235. According to example embodiments, the second communication link 122 is a second UDP communication link 122. The relay node 101 and the VPN server 160 may each create a respective socket for communicating over this second communication link 122. The information 235 may comprise the respective corresponding port numbers. As such, the relay node 101 has provided two sockets for providing the relaying, a first socket 410 for first communication link 121 and a second socket 411 for second communication link 122. In step 216, comprising steps 217, 218, 219, 220, the relay node 101 provides a relaying link along the second network path 122.

Next, the VPN tunnel 150 is established over the first network path 125. After step 220, the relaying path can be used by the client node 100 to set up the VPN tunnel along the first network path 125. This may be achieved by steps 206, 207, 262, 263. In steps 206, 262, the client node 100 and VPN server 160 set up the VPN communication between them by exchanging VPN information 236 via the first network path 125. The client node 100 acts as VPN client and initiates the set-up of the VPN tunnel with the VPN server 160. In steps 207, 263, the client node 100 and VPN server 160 configure a local virtual network interface that acts as belonging to the same local network. By setting up the appropriate local forwarding rules in the client node, network packets from the client are then routed to the VPN server and vice versa. Steps 206, 207 and steps 262, 263 may be executed in conjunction. The virtual interfaces shield off the underlying linking mechanisms of the first network path 125 and VPN tunnelling. The virtual interfaces can be used for exchanging traffic between the client node 100 and the VPN server 160.

The abovementioned steps 201, 202, 203, 204, 205, 206, 207 may be performed by configuring a dedicated VPN client application on the client node 100. The abovementioned steps 210, 213, 214, 215, 217, 218, 219, 220 may be performed by a dedicated VPN relay application on the relay node 101.

Figure 1 and Figure 2 have been described wherein the first communication link 121 is set up as a UDP connection communication link over the local network 110. Communication link 121 is thus established over the local network and considered as an indirect link between the client node 100 and the relay node 101. Indirect thereby refers to the fact that network traffic over this indirect may by forwarded along other network nodes such as gateway 103, a network switch, a wireless bridge, or a wireless access point. According to an alternative embodiment, the communication link 121 is established as a dedicated or direct link 121, e.g., a wireless dedicated link using the Wi-Fi Direct peer-to-peer, P2P, protocol. Details for setting up this link may be exchanged during steps 205, 218. As the link is a direct link, the latency on this link will be lower than when using an indirect link, e.g. over the local network. According to this alternative embodiment, discovery may still be performed using the local network 110. For example, steps 201, 202, 213, 214 may be performed via the local network 110. The steps 203, 215 for setting up the control channel may be performed via the local network 110 or may, alternatively, be performed via dedicated direct link. The control channel may thus be a channel over the local network 110 or may be a channel over a dedicated direct wireless link, regardless of the first communication link 121 being an indirect link via the local network 110 or a direct link.

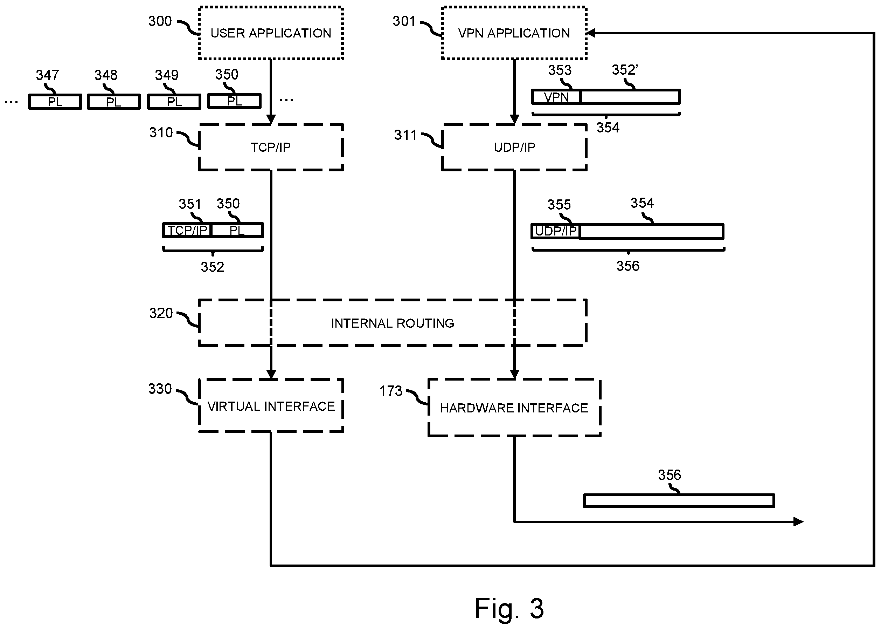

Figure 3 shows a schematic view of the processing of uplink traffic in client node 100 after establishing the VPN tunnel 150 via the first network path 125 according to example embodiments, for example after setting up the VPN tunnel 150 as illustrated in Figure 2. By uplink is meant that the traffic 352 is transmitted by the client node 100 and received by the target node 143. The client node 100 comprises a user client application 300 configured to communicate with target node 143 in remote network 140 over the Internet 180. The application 300 provides data to be sent to the remote network 140 to a TCP/IP interface 310. The TCP/IP interface 310 may be provided in the form of a TCP/IP socket 310 to the client application 300. The TCP/IP socket 310 provides splitting of the data into chunks of payload 347, 348, 349, 350 to fit into a TCP/IP packet. The further processing steps are described for the example of payload data 350. TCP/IP socket 310 provides the payload 350 with a TCP header and an IP header, combinedly referred to as TCP/IP header 351. The TCP/IP header 351 indicates the network address of the target node 143 as destination address. As such, TCP/IP socket 310 encapsulates the payload 350 into a TCP/IP packet 352, also referred to as datagram or network traffic 352. The traffic 352 is internally routed to virtual interface 330 as per the forwarding rule that traffic destined for the remote network is to be routed to the virtual interface 330. The internal routing 320 is performed based on the destination address of the target end node 143. The virtual interface 330 is further configured to forward the traffic to VPN client application 301.

VPN client application 301 is configured to exchange traffic with the VPN server 160 over the VPN tunnel 150 via the first network path 125. The VPN client application 301 encapsulates traffic 352 into VPN traffic 354. The encapsulation is performed by attaching a VPN header 353 to the traffic 352. Optionally, the traffic 352 is encrypted to traffic 352' by the VPN client application 301. The VPN traffic 354 is then forwarded, by the VPN client, to UDP/IP interface or socket 311. A UDP header and an IP header are added to the beginning of the VPN traffic 354, resulting in traffic 356. The UDP header and the IP header are collectively referred to as UDP/IP header 355. The UDP/IP header 355 indicates the IP address of the relay node 101 as destination address. The UDP/IP header 355 indicates the port number of the socket of the relay node 101 corresponding to first communication link 121 as destination port. The socket of the relay node 101 may correspond to the socket created by the relay node 101 in step 218 of Figure 2 and obtained by the client node 100 in step 205 of Figure 2. The traffic 356 is further internally routed 320 to hardware interface 173 and sent over the first communication link 121, based on the UDP/IP header 355. Hardware interface 173 corresponds to hardware interface 173 depicted in Figure 1.

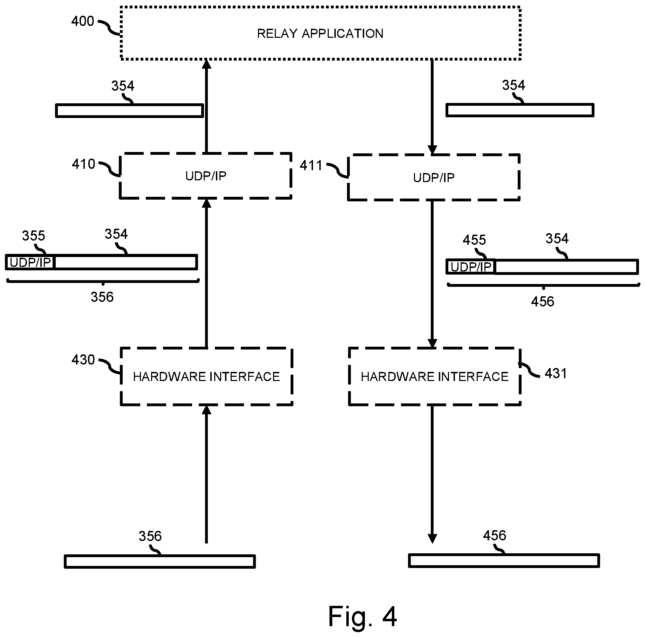

Figure 4 shows a schematic view of the processing of uplink traffic in relay node 101 after establishing the VPN tunnel 150 via the first network path 125 according to example embodiments. The traffic 356 arrives at relay node 101 via the first communication link 121 to hardware network interface 430. Hardware interface 430 may, for example, correspond to first communication interface 11, i.e. a network interface connected to the local network. The traffic 356 is forwarded to UDP/IP interface or socket 410 as established for the relaying, for example in step 218 of Figure 2. UDP/IP socket 410 strips traffic 356 from its header and thereby extracts VPN traffic 354. The VPN traffic 354 is provided to relay application 400 as it is the endpoint of the first communication link 121. The relay application 400 has been configured during set-up to relay VPN traffic to VPN server 160 via UDP/IP socket 411. The configuration of relay application 400 may result from the configuration step 220 of Figure 2. UDP/IP socket 411 was then created during set-up of the second communication link 122, for example as during step 219 of Figure 2.

The UDP/IP socket 411 re-encapsulates the VPN traffic 354 into a UDP/IP network packet 456. The UDP/IP socket 411 assigns the IP address of the VPN server 160 as destination address in the new header 455. The UDP/IP socket 411 assigns the port number corresponding to the VPN service on the VPN server 160 as destination port in the header 455. The VPN server's 160 address and port number may, for example, be obtained during set-up as in step 217 of Figure 2. The resulting traffic 456 comprises the VPN traffic 354 as payload and the header 455. The traffic 456 is forwarded to the hardware interface 431, e.g. wireless communication interface 12, to be sent over the second communication link 122 to VPN server 160.

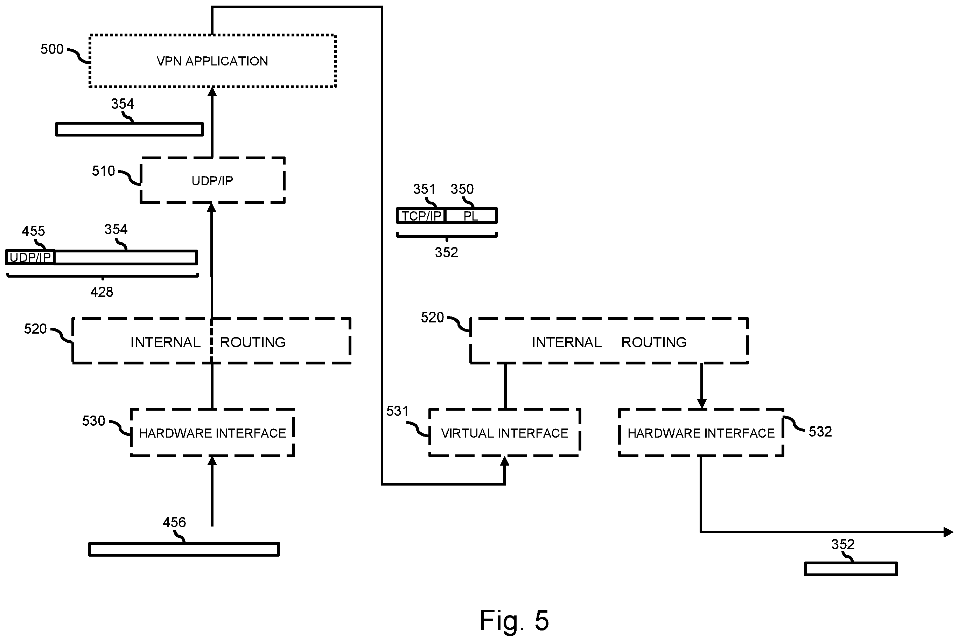

Figure 5 shows a schematic view of the processing of uplink traffic in VPN server 160 after establishing the VPN tunnel 150 via the first network path 125 according to example embodiments. Via the second communication link 122, the traffic 456 arrives at hardware interface 530 of the VPN server 160. Based on the designated destination port number in the header of traffic 456, the traffic 456 is internally routed to UDP/IP socket 510. UDP/IP socket 510 is established by the VPN server 160 during set-up of the first network path 125, for example during step 262 of Figure 2. UDP/IP socket 510 removes the header 455, thereby recovering VPN traffic 354. The VPN traffic 354 is provided to VPN server application 500. The VPN server application 500 reads the VPN header 353 to recover traffic 352, optionally after a step of decrypting 352'. Traffic 352 comprises the TCP/IP header 351 indicating the network address of the target node 143 as destination address. The VPN application 500 then provides the traffic 352 to the connected virtual interface 531. The virtual interface 531 is provided during set-up of the VPN, for example as in step 263 of Figure 2. Via virtual interface 531, the traffic 352 arrives in the networking stack of the VPN server 160. The internal routing of the VPN server 160 is then configured by a rule to forward the traffic 352 to hardware interface 532, thereby sending the traffic 352 to the target node 143 in remote network 140.

It will be apparent that downlink traffic can be transmitted analogously by similar but opposite steps. The traffic is then sent in a direction opposite to the flow illustrated in Figure 3, Figure 4 and Figure 5. For example, instead of adding a header, a socket or the VPN application may remove an already existing header and vice versa. By downlink is meant that traffic is transmitted by the target node 143 and received by the client node 100.

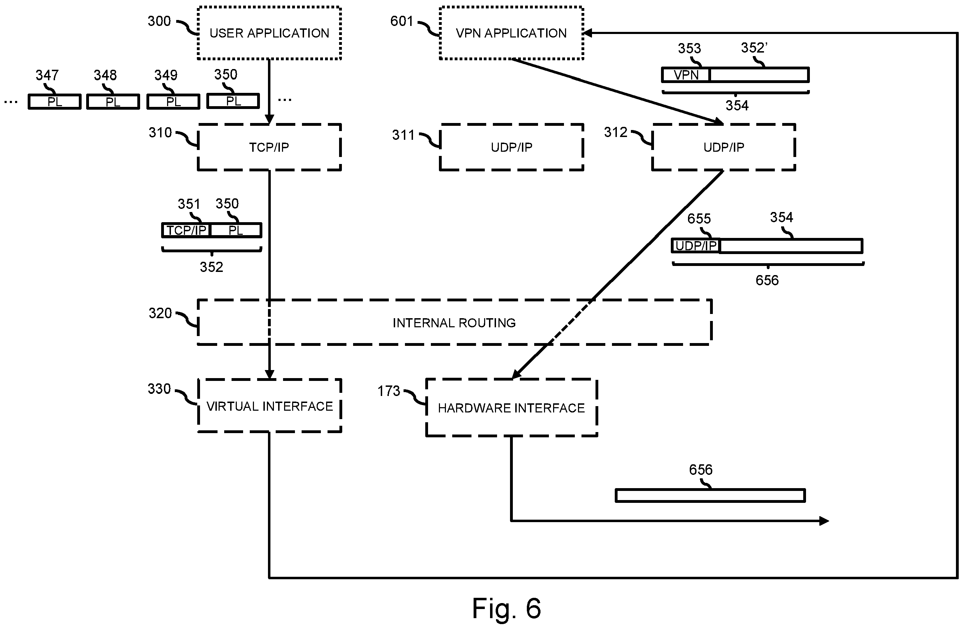

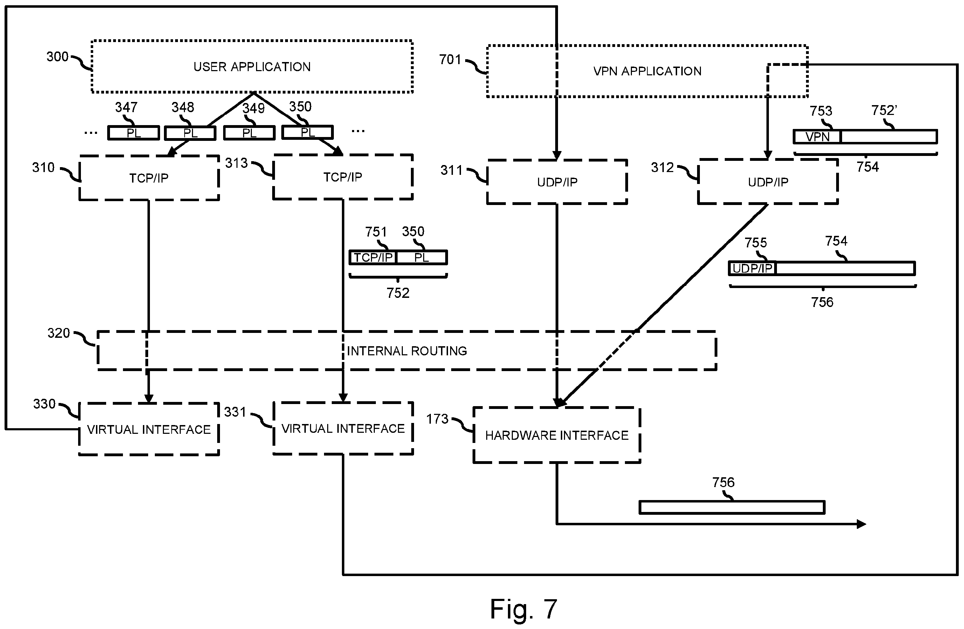

With reference to Figure 1, the VPN tunnel 150 may be established over the first network path 125 and/or over the second network path 135. The client node 100 can communicate with target node 143 via the two distinct network paths 125, 135 over which VPN tunnel 150 is provided. The network interface 173 is configured to put traffic onto the first communication link 121 in uplink and to recover traffic from the first communication link 121 in downlink, along the first network path 125. The network interface 173 is further configured to put traffic onto the third communication link 131 in uplink and to recover traffic from the third communication link 131 in downlink, along the second network path 135. The first communication link 121 and the third communication link 131 may be accessible to the client node 100 via the same interface 173, e.g. antenna 10. Figure 6 and Figure 7 each illustrate a schematic of an example embodiment of the client node 100 configured to exchange traffic with the remote network 140 over the first and/or second network paths 125, 135. Figure 6 illustrates an example embodiment where the client node 100 comprises a single virtual interface 330 for accessing the VPN tunnel over the two different network paths. Figure 7 illustrates an example embodiment where the client node 100 comprises two virtual interfaces 330, 331 for accessing the VPN tunnel over the respective network paths.

Figure 6 shows a schematic view of the processing of uplink traffic in client node 100 via the VPN tunnel 150 over the first and second network paths 125, 135 according to an example embodiment.

With reference to Figure 6, analogously to Figure 3, a user application 300 may provide payload data 350 to TCP/IP interface or socket 310 to be put into a packet 352 by adding a header 351. After internal routing 320, the packet 352 is provided to the virtual interface 330, which forwards the packet to a VPN application 601. VPN application 601 is configured to encapsulate the traffic 352 into VPN traffic 354 by applying a header 353 and optionally encrypting the traffic 352, resulting in VPN payload 352. Client node 100 has UDP/IP interface or socket 311 for exchanging traffic over communication link 121 via the first network path 125.

In the embodiment shown in Figure 6, client node 100 also has a second UDP/IP interface or socket 312 for exchanging traffic over communication link 131 via the second network path 135. VPN application 601 is further configured to provide the VPN packet 354 to either of socket 311 and socket 312. The VPN application 601 may provide all VPN traffic 354 to socket 312 by default. Socket 312 provides a UDP/IP header 655 to the VPN traffic 354, resulting in UDP/IP traffic 656. The header 655 comprises the IP address of the client node 100 as source network address and the port number of UDP socket 312 as source port. Alternatively, the VPN application may distribute the VPN traffic 354 over sockets 311, 312 at a certain distribution ratio, e.g. 50-50, to take effects such as congestion over the different network paths 125, 135 into account. Such a ratio may, for example, be based on measurement data of traffic exchanged over the network paths 125, 135. As such, a multipath VPN tunnel 150 is achieved. In case of a detected failure of the second network path 135, the VPN application 601 may adapt the forwarding to provide all VPN packets 354 to socket 311. Alternatively, the VPN application 601 may provide all VPN traffic 354 to socket 311 by default. Socket 311 is configured to provide a header comprising the IP address of the client node 100 as source network address and the port number of UDP socket 311 as source port. The choice between the first and second network paths 125, 135 may also be left to a user of the client node 100. Via internal routing 320, packets originating from sockets 311, 312 reach a respective hardware interface connecting to the respective links 121, 131. In this example, the hardware interfaces coincide and are the same hardware interface 173.

In the downlink direction, traffic flows in the opposite direction, i.e. from the hardware interface 173 to one of the sockets 311, 312, depending on the destination port mentioned in a header of the traffic, to the VPN application 601, via the virtual interface 330 to TCP socket 310 back to user application 300.

Figure 7 shows a schematic view of the processing of uplink traffic in client node 100 after establishing the VPN tunnel 150 via the first and second network paths 125, 135 according to an example embodiment.

In the embodiment of Figure 7, the user application 300 may control transmission of traffic over the network paths 125, 135. The client node 100 comprises an additional TCP/IP interface or socket 313. Sockets 310, 313 respectively correspond to one of the first and second network paths 125, 135. In this example, socket 310 corresponds to the first network path 125 and socket 313 corresponds to the second network path 135. Socket 310 is provided by the client node 100 during establishment of the first communication link 121, e.g. as illustrated in step 205 of Figure 2. Socket 313 is provided by the client node 100 during establishment of the third communication link 131. User application 300 may provide payload data 350 to either one of socket 310 and socket 313, depending on which network path of VPN tunnel 150 is intended to be used. In Figure 7, payload data 350 is destined for the second network path 135 and is provided to socket 313. Socket 313 attaches a header 751 to payload data 350, thereby creating traffic or packet 752. The header 751 defines the network address of the client node 100 as source address and a port number of socket 313 as source port.

The client node 100 has two virtual interfaces 330, 331 respectively corresponding to the first and second network paths 125, 135 and thereby to the sockets 310, 313. Virtual interface 330 is provided by the client node 100 during establishment of the first network path 125 of VPN tunnel 150, e.g. as illustrated in step 207 of Figure 2. Virtual interface 331 is provided by the client node 100 during establishment of the second network path 135 of VPN tunnel 150. The internal routing mechanism 320 of the client node 100 provides packets originating from socket 310 to virtual interface 330 for transmission over the first network path 125. The internal routing mechanism 320 of the client node 100 provides packets originating from socket 313 to virtual interface 331 for transmission over the second network path 135. Both virtual interfaces 330, 331 are configured to forward packets to VPN application 701.

VPN application 701 encapsulates the traffic 752 into VPN traffic 754 by providing a VPN header 753 and optionally encrypting the VPN payload 752 to encrypted VPN payload 752'. VPN application 701 further provides the VPN packet 754 to either the socket 311 or socket 312, depending on which virtual interface 330, 331 the traffic 752 originates from. As in Figure 6, client node 100 also has the second UDP/IP interface or socket 312 for exchanging traffic over communication link 131 via the second network path 135. In Figure 7, an example is illustrated where the traffic 752 is provided by virtual interface 331, i.e. intended for second network path 135. The VPN application 701 recognises that the packet 752 was sent to it by virtual interface 331 and therefore knows that the packet 752 is intended to be sent over network path 135 and that it must correspondingly provide VPN traffic 754 to socket 312. Via internal routing 320, packets 756 originating from sockets 311, 312 reach a respective hardware interface connecting to the respective links 121, 131. In this example, the hardware interfaces coincide and are the same hardware interface 173.

In the embodiment of Figure 7, the VPN application 701 simply forwards the traffic to the corresponding socket 311, 312. The choice of transmitting the VPN traffic 754 over the first and/or second network paths 125, 135 may be as explained for the embodiment of Figure 6, but is performed by the user application 300 instead of the VPN application 701 in the embodiment of Figure 7.

In both embodiments of Figure 6 and Figure 7, the VPN application 301 may regularly check if the second network path 135 is operating sufficiently well. For example, the VPN application 301 may periodically initiate a ping pong message process between the client node 100 and the VPN server 160 to check the status of the connection over the second network path 135. When an undesired network condition is detected, the VPN application 301 may redirect the VPN tunnel 150 over the first network path 125. Such a condition may, for example, result from an outage or high congestion over the second network path 135. The client node 100 may set up the VPN tunnel 150 over the first network path 125 upon power-on, by performing steps 206, 207. Then, the redirecting can be performed instantaneously. Alternatively, the client node 100 sets up the VPN tunnel 150 over the first network path 125 upon detecting the predefined network condition, whereafter redirecting can be performed.

The above described embodiments illustrated the relaying of a VPN tunnel by means of a relay node using two distinct communication links, e.g. using two UDP connections. According to further example aspects, other network services apart from VPN services may be provided by using the same mechanism. This may for example be achieved by a computer-implemented method for providing a client node a transport layer communication connection with a remote network node. The client node is thereby connected to a local network. A relay node is connected to the local network as a client over a first communication interface. The relay node is further connected to a wireless access network over a wireless communication interface. The method then comprises the following steps:
- exchanging traffic between the client node and the first communication interface of the relay node via the local network over a first transport layer communication link between the client node and the relay node; and
- relaying the payload over a second transport layer communication link between the wireless communication interface of the relay node and the remote network node.
By the exchanging and relaying steps, the traffic is exchanged between the client node over a network path provided by the first and second transport layer communication link.

For example, the remote network node may correspond to a domain name system, DNS, server. This way, resilience is ensured in case of Internet outage, or, latency is reduced in case access via the local network is too slow. Further, network traffic according to the QUIC or multipath QUIC, MPQUIC, transport protocol may also be relayed over the relay node.

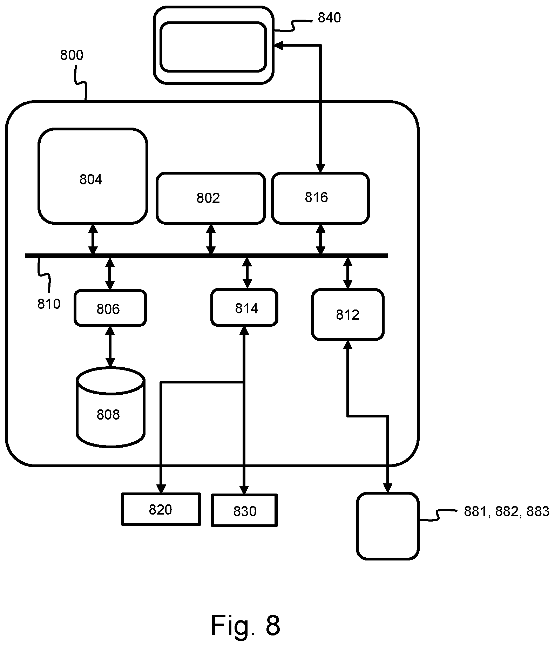

Figure 8 shows a suitable computing system 800 enabling to implement embodiments of the system. Computing system 800 may be an example embodiment of a client node 100, a relay node 101, a VPN server 160.

Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. For example, the conductors may comprise one or more wireless conductors. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802.

Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism, such as for example one or more Ethernet interfaces or one or more wireless communication interfaces, e.g. antennas, that enables computing system 800 to communicate with other devices and/or systems, for example with other computing devices 881, 882, 883. Other computing devices 881, 882, 883 may, for example, be any of the following: client node 100, relay node 101, VPN server 160, gateway 103. The communication interface 812 of computing system 800 may be connected to such another computing system by means of a local area network (LAN) or a wide area network (WAN) such as for example the internet.

Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 800 could thus be configured to comprise program instructions stored thereon for performing the computer-implemented method according to the first example aspect.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for providing a client node (100) access to a remote network (140,180) via a virtual private network, VPN, tunnel (150) to a VPN server (160); wherein the client node is connected (131) to a local network (110); and wherein a relay node (101) is connected (132) to the local network over a first communication interface (11), and is further connected to a wireless access network (120) over a wireless communication interface (12); the method comprising the following steps:
- exchanging traffic between the client node and the first communication interface of the relay node, by encapsulating the traffic as VPN traffic of the VPN tunnel, and exchanging the VPN traffic as payload over a first transport layer communication link (121) between the client node and the relay node;
- relaying the payload over a second transport layer communication link (122) between the wireless communication interface of the relay node and the VPN server;
and thereby, by the exchanging and relaying steps, exchanging the traffic between the client node and the VPN server via the VPN tunnel over a first network path (125); and
- exchanging, by the VPN server, the traffic between the VPN tunnel and the remote network.

2. The method according to claim 1, wherein the first transport layer communication link is a first User Datagram Protocol, UDP, communication link, wherein the second transport layer communication link is a second UDP communication link, and wherein the payload is UDP payload.

3. The method according to claim 2, further comprising:
- instructing, by the client node, over a control channel, the relay node to provide a relay service for performing the relaying with the VPN server;
- starting, by the relay node, the relay service; and
- providing, over the control channel, the client node a UDP port on the relay node for establishing the first UDP communication link.

4. The method according to claim 3, further comprising:
- providing, by the relay node, a discovery service for discovering the relay node via the local network; and
- establishing, by the client node, the control channel with the discovered relay node.

5. The method according to claim 3 or 4, wherein the establishing the control channel further comprises authenticating the client node with the relay node.

6. The method according to any one of the preceding claims, further comprising, by the client node, providing a virtual network interface (330) for accessing the remote network over the VPN tunnel.

7. The method according to any one of the preceding claims, wherein the local network is further connected to a second access network (130) via a local gateway (103) configured to provide access to the VPN server via a second network path (135).

8. The method according to claim 6 and 7, wherein the virtual network interface is configurable to exchange the traffic over the VPN tunnel between the client node and the VPN server via the first network path and/or the second network path.

9. The method according to claim 8, wherein the exchanging of the traffic via the second network path comprises:
- encapsulating the traffic as VPN traffic of the VPN tunnel; and
- exchanging the VPN traffic as payload over a third transport layer communication link (131) between the client node and the VPN server.

10. The method according to claim 8 or 9, further comprising establishing the VPN tunnel between the client node and the VPN server via the first network path and/or the second network path.

11. The method according to any one of claims 8-10, further comprising:
- exchanging the traffic via the second network path; and
- upon detecting a predefined network condition, reconfiguring the virtual network interface to exchange the traffic via the first network path.

12. The method according to any one of claims 8-11, further comprising:
- distributing, by the client node and the VPN server, traffic between the client and the remote network over both the first and second network path; and
- recombining, by the client node and the VPN server, traffic received from the first and second network path.

13. The method according to any one of claims 6-12, wherein the virtual network interface is configured to exchange the traffic over the VPN tunnel between the client node and the VPN server via the first network path; and wherein the method further comprises providing, by the client node, a second virtual network interface and establishing a second VPN tunnel between the client node and the VPN server via the second network path.

14. The method according to any one of the preceding claims, wherein the remote network is the Internet (180) or a private network (140).

15. The method according to any one of the preceding claims, wherein the VPN server is accessible over the Internet (180).
